# EUROPEAN PATENT SPECIFICATION

(11) **EP 0 513 367 B1**
(45) Date of publication and mention of the grant of the patent: **12.06.1996**
(21) Application number: 91918995.1
(22) Date of filing: 01.11.1991
(51) Int. Cl.: C04B 7/36, B01J 2/02, C04B 7/00, C04B 7/48

(54) **SPHERICAL HYDRAULIC SUBSTANCE AND PRODUCTION THEREOF**
SPHÄRISCHE HYDRAULISCHE SUBSTANZ UND IHRE HERSTELLUNG
SUBSTANCE HYDRAULIQUE SPHERIQUE ET SA PRODUCTION

(30) Priority: 05.11.1990 JP 297147/90; 30.04.1991 JP 124393/91
(43) Date of publication of application: 19.11.1992
(73) Proprietor: MITSUBISHI MATERIALS CORPORATION, Chiyoda-ku, Tokyo (JP); HATTORI, Ken-ichi, Tokyo 181 (JP)
(72) Inventor: HATTORI, Ken-ichi, Mitaka-shi, Tokyo 181 (JP); ASAKURA, Etsuro, Mitsubishi Materials Corporation, Omiya-shi, Saitama-ken 330 (JP); FUKUTA, Yasuhiro, Mitsubishi Materials Corporation, Omiya-shi, Saitama-ken 330 (JP); FUJISAWA, Hiroyuki, Mitsubishi Materials Corp., Omiya-shi, Saitama-ken 330 (JP)
(74) Representative: Casalonga, Axel
(86) International application number: JP9101497
(87) International publication number: WO9207803

(56) References cited:
- EP-A- 0 437 324
- JP-A-59 121 140
- JP-Y- 3 628 657
- US-A- 5 253 991
- PATENT ABSTRACTS OF JAPAN vol. 16, no. 219 (C-943)22 May 1992 & JP-A-04 042 843 (SUMITOMO CEMENT CO, LTD.) 13 February 1992

## Description

### TECHNICAL FIELD

This invention relates to spherical hydraulic materials for manufacturing high strength moldings and also to a method for making spherical hydraulic materials.

### TECHNICAL BACKGROUND

Known hydraulic materials such as, for example, cements, granulated blast furnace slag fine powders, and the like are produced by a method wherein starting materials are fired or melted at high temperatures, cooled to obtain a bulky or particulate material, to which appropriate secondary materials are added and finely pulverized. The resultant individual particles have a sharp, irregular form.

Because of the sharp, irregular shape, these particles kneaded along with water do not show good fluidity. In cement pastes, the amount of water enough to obtain a minimum fluidity for molding is 30% in terms of a water-cement ratio. If superplasticizer is used, the amount of water can be reduced but to an extent that the water-cement ratio is, at most, 25%.

On the other hand, it is well known that when the water-cement ratio is made small, the concrete strength after setting becomes high. Accordingly, efforts have been heretofore made in order to make the water-cement ratio as small as possible and to set a dense concrete thereby obtaining a high strength hardened product.

With cements obtained by conventional pulverizing methods, It is not possible to make a small water-cement ratio, so that the compressive strength of the resultant concrete is approximately 1200 kgf/cm² in a maximum. Accordingly, it cannot be substituted for structural ceramics or metals.

Hydraulic materials and, for example, cements are generally produced by compounding, finely pulverizing and firing starting materials mainly composed of one or more of CaO, SiO₂, Al₂O₃ and Fe₂O₃ to obtain a clinker, adding gypsum to the clinker, and finely pulverizing the mixture. Accordingly, not only the resultant particles have a sharp or angular shape, but also a large quantity of heat is required for the firing and great electric power is necessary for two pulverization processes.

As a method for spheroidizing finely pulverized, hydraulic powder, there is known a method, as disclosed, for example, in Japanese Laid-open Patent Application No. 2-192439, in which particles surfaces are spheroidally smoothed by means of an impact device in a high speed stream. In this method, the clinker has to be fired and the degree of the spheroidization and the smoothness of the surface are not satisfactory. In addition, this method requires not only the consumptions of heat and electric power necessary for known cement manufacturing methods, but also additional electric power consumption for imparting rotary impact to the fine particulate material.

### DISCLOSURE OF THE INVENTION

This invention contemplates to solve the drawbacks of the above-stated prior art and has for its object the provision of a spheroidized hydraulic material with a higher degree of completeness and also a method for making the same.

In order to achieve the above object, the invention provides a spherical hydraulic powder which comprises CaO, SiO₂, Al₂O₃ and Fe₂O₃ as main ingredients, characterized in that the powder is cooled after melting at least on the surfaces thereof and has a size of not larger than 500 µm and an average circularity of not smaller than 0.7.

In order to achieve the above object, a first method of the invention for making a spherical hydraulic material is characterized by comprising melting a starting material composed mainly of CaO, SiO₂, Al₂O₃ and Fe₂O₃, scattering the resultant melt, and cooling and solidifying the melt in the scattered state.

A second method of the invention for making a spherical hydraulic material for achieving the object is characterized by comprising providing a hydraulic powder composed mainly of CaO, SiO₂, Al₂O₃ and Fe₂O₃, melting at least surfaces of the powder in a scattered state, and cooling and solidifying the melted powder being scattered.

A third method of the invention for making a spherical hydraulic material for achieving the object makes use of a quantity of potential heat involved in hot materials, such as slags from iron-making plants, which are melted or have a temperature of not lower than 500°C and is characterized by comprising mixing a dried, calcined or sintered product or a melt of a starting material composed mainly of one or more of CaO, SiO₂, Al₂O₃ and Fe₂O₃ with the hot material such as the slag in the form of a melt or having a temperature not lower than 500°C to provide a mixed melt, scattering the melt, and cooling and solidifying the melt being scattered.

The hydraulic material of the invention which comprises as its main ingredient CaO, SiO₂, Al₂O₃ and Fe₂O₃ is a spherical hydraulic material which is characterized by having a particle size of not larger than 500 µm and an average circularity of the particles of not smaller than 0.70. The circularity of the particles is indicated by a ratio of a peripheral length of a circle with the same projected area as that of an observed particle to a contour length of a projected plan determined by scanning electron microscopic observation of the particle. The average circularity is an average value of the circularities of arbitrarily selected 50 particles.

The particle size of the spherical hydraulic material of the invention should be not larger than 500 µm, preferably not larger than 100 µm. With particles whose size exceeds 500 µm, the strength after hardening is low. When the average circularity is smaller than 0.7, the fluidity of the resultant paste, mortar or concrete is unsatisfactory and the circularity should preferably be not smaller than 0.9.

The spherical hydraulic material of the invention can be in the form of spherical fine particles having a size of not larger than 3 µm. These spherical fine particles act similar to spherical fine particles, such as silica fume, utilized in high strength concrete. The mixture with water can improve the fluidity, and ensures the closest packing structure thereby attaining high strength, reducing shrinkage by drying and achieving high durability. Choice of an appropriate particle size and use of the particles in combination with dispersants for use as cast products will not only develop high strength comparable to oxide ceramics moldings obtained by sintering, but also provide moldings which are better in dimensional accuracy than the oxide ceramic sintered products because any sintering process after the casting is not necessary.

The spherical hydraulic material of the invention has such a ball bearing effect that by mixing at the same level in amount of water, the fluidity of the resulting mixture is improved. The amount of water required for obtaining the same level of the fluidity can be significantly reduced. In addition, since the shape is spherical, good sliding among the particles is ensured with the likelihood of close packing through natural settlement. These tendencies are more likely to be shown when the particle shape is closer to a sphere. When the average circularity is smaller, a lower packing density is produced, leaving greater spaces in the mass. When the average circularity is not smaller than 0.7, good physical properties are obtained as will not be expected in ordinary cements.

Accordingly, the strength of pastes, mortars and concretes using the spherical hydraulic material can be remarkably improved. It is beyond question that good results will be obtained when used in combination with spherical aggregates. Moreover, when the spherical hydraulic material is used by mixing with ordinary hydraulic materials such as cements at arbitrary ratios, similar results as set out above will be expected.

The particles of the invention are close in shape to a sphere with a smooth surface and a small surface area per unit weight with the attendant advantage that the amount of adsorption and occlusion of mixing agents added for increasing the dispersability is reduced and the amount of the agents can thus be reduced.

In application of the hydraulic material of the invention, it may be used, if necessary, by mixing with not only sulfate materials such as gypsum, alkali sulfates, magnesium sulfate and the like which have different forms or aqueous solutions containing the sulfate materials, but also various types of cements, silica fume, granulated blast furnace slags, fly ashes, clays, mixing materials such as trasses, retarding agents such as expanders, oxycarboxylates, ligninsulfonates, citrates, gluconates, magnesium silicofluoride, saccharides and derivatives thereof, hardening promoters such as calcium chloride, sodium carbonate, sodium silicate, sodium aluminate and the like, mixing agents for increasing dispersability such as naphthalene sulfonate formaldehyde condensates, melamine sulfonate formaldehyde condensates, polycarboxylic acids, purified lignins and the like, surface active agents such as resin soaps, polyoxyethylene alkylallyl sulfates, dodecylbenzenesulfonates and the like, shrinkage-reducing agents, waterproofing agents, anti-freezing agents, neutrality preventives, rust preventives, efflorescence preventives, alkaline aggregates reaction preventives, quick setting agents, thickening agents, and polymer emulsions.

Since the spherical hydraulic material of the invention is in the form of spherical fine particles which have a smooth surface and a shape close to spheres, the mulled mixture with water has fluidity and strength developing properties better than those of conventional cements. When the mixture is applied as high strength concrete, self-levelling hardened products, cast moldings and fillers for fine interstices or gaps, remarkable performance as will be not expected in prior art counterparts can be shown.

The spherical hydraulic material of the invention can be obtained by melting a starting material comprising constituent ingredients of the material, scattering or atomizing the resultant melt, and cooling and solidifying the scattered melt.

The melting and scattering method and apparatus are not critical. There are used combustion gas systems, plasma systems and explosion systems. Alternatively, after melting in electric furnaces, gas furnaces, arc discharge furnaces, reverberatory furnaces, dust coal burning boilers, laser melting apparatus and the like, the melt may be scattered in a decompression apparatus, may be dropped and scattered with high-pressure air, inactive gas, or steam, may be brought to collision to one another in a high speed-rotary device, or may be placed in a high speed rotary device thereby permitting the melt to be scattered by the action of the centrifugal force. Since the melt being scattered is cooled and solidified, the hydraulic material is made spherical by the surface tension. A lower viscosity results in a small size. In order to make a small size, various types of fluxes may be used as a viscosity-reducing agent.

The starting materials can be, aside from those ordinarily used as a starting material for cements, e.g., limestone, clays, siliceous stone, slags, bauxite and raw materials for iron, coal ashes, various types of incinerated ashes, sewage sludge ashes, quick lime, volcanic ashes, red mud and the like. These may be appropriately used in combination. Moreover, hydraulic materials such as cements, cement clinkers and slags may be used singly or in combination.

The size, size distribution and degree of crystallization of the spherical particles may be arbitrarily controlled by changing the starting composition and the types of agents, the temperature, surface tension, viscosity and scattering and cooling conditions of the melt, with the likelihood that a diversity of intended properties are imparted to the hydraulic material. Since the spherical hydraulic material according to the invention is spheroidized by the action of the surface tension of the melt, the viscosity of the melt greatly influences the size, size distribution and circularity of the cooled spherical material. The viscosity of the melt can be appropriately controlled depending on the melting temperature, the oxidative·reductive atmosphere at the time of the melting, the chemical composition of the starting material and the addition of fluxes. The type and concentration of a gas in which the melt is scattered may be changed or an intended compound may be contained in the gas to subject the spherical particles to surface treatment at high temperatures, with the possibility that there are controlled the fluidity characteristic, hydration reactivity and adsorbing properties of admixtures.

It will be noted that in order not to cause the particles to be melt-bonded with one another during the course of the spheroidization of the particles, proper distribution and cooling conditions should be established such as the shape of a nozzle, the distribution, charge in amount and residence time of the particles, and the type, pressure, temperature and amount of gas for the gas atomizing technique, the degree of vacuum, temperature and shape of a nozzle for the reduced pressure technique, and the number of rotation, the radius of a disk, and the charge in amount and dropping position of the melt for the centrifugal technique.

Unlike existing cement-making methods which make use of rotary kilns and pulverizers, the above manufacturing methods bring about the following innovating technical effects. More particularly, when using a rotary kiln, the amount of a liquid phase at the time of sintering is considerably increased for granulation of clinker, so that a melt-bonding phenomenon will take place in the rotary kiln or a starting material having a chemical composition which becomes unlikely to be sintered at a sintering temperature of about 1500°C cannot be used. In accordance with the method of the invention, all starting materials covering a wide range of chemical compositions which are able to be melted can be employed. This leads to the possibility that a wide variety of combinations and ratios of hydraulic minerals such as clinker minerals are in use. This enables one to readily have a diversity of properties imparted to hydraulic materials including those which will have been difficult to use in practice.

On comparison with the ordinary cement-manufacturing procedure, the procedure including the melting to spheroidizing process is reduced in number of movable portions and monitoring items, with the attendant advantage from the standpoint of the maintenance and running operations of the manufacturing apparatus. Since any finishing pulverizing process is not necessary, energies for pulverization and transport can be saved with a reduced amount of dust treatment. In addition, the powder has a great bulk density, resulting in an increase in storage weight over ordinary cements for the same volumetric level.

As having described hereinabove, according to the method of the invention, when using the same starting material as for known cements, it is possible to produce hydraulic materials which have the properties remarkably improved over those of the known cement and exhibit novel properties, like those of oxide ceramic sintered products. Thus, contribution to the art of this field is of incalculable value.

Alternatively, the spherical hydraulic material of the invention may also be obtained by scattering a hydraulic powder having constituent ingredients while melting at least surfaces of the powder, and cooling and solidifying the powder being scattered.

The procedure and apparatus for carrying out the above method are not critical. Plasma systems, arc discharge systems and the like may be used. The size distribution and concentration of the particles being fed, the type and amount of dispersant, and the type, temperature and amount of gas are appropriately selected to determine proper dispersion and cooling conditions.

In this method, the resultant particles are spheroidized because at least the surfaces thereof are melted, cooled and solidified. The effect of the spheroidization is similar to that of the afore-stated case.

Still alternatively, the spherical hydraulic material of the invention may be obtained by mixing dried products, calcined products, sintered products or melts of starting materials composed mainly of one or more of CaO, SiO₂, Al₂O₃ and Fe₂O₃ with a hot material such as a slag from iron-making plants in the form of a melt or having a temperature not lower than 500°C to provide a mixed melt, scattering or atomizing the melt, and cooling and solidifying the melt being scattered.

In this case, the hot material such as a slag from iron-making plants may be selected from blast furnace slags, steel-making furnace slags, coal ashes, sewage sludge ashes, various garbage incinerated ashes, rice husk ashes, magma, lava and the like while taking into consideration the compositions thereof. These may be used in the form of a melt and their potential heat can be utilized.

The starting material which comprises as a main ingredient at least one of CaO, SiO₂, Al₂O₃ and Fe₂O₃ may be limestone, quick lime, clays, siliceous stone, bauxite, iron ores, copper slags, fluorite and the like while taking into account the hot material such as iron slags and the composition of the clinker to be produced. The starting material is dried, calcined, sintered or melted and then mixed with the hot material, such as an iron slag, in the form of a melt or having a temperature of not lower than 500°C.

Subsequently, the mixed melt of the hot material such as the iron slag and the starting material is scattered, followed by cooling and solidification during the course of the scattering to provide particles having a size of not larger than 500 µm and an average circularity of not smaller than 0.7.

The melting·scattering method and apparatus are not critical as stated hereinbefore.

Where this method utilizing the hot material such as iron slags is adopted, not only those effects as set forth before are shown, but also the quantity of potential heat of the hot material can be utilized as an energy for producing the clinker mineral, thus leading to the advantage that the heat energy cost can be remarkably saved when compared with that of known methods.

### BRIEF DESCRIPTION OF THE DRAWING

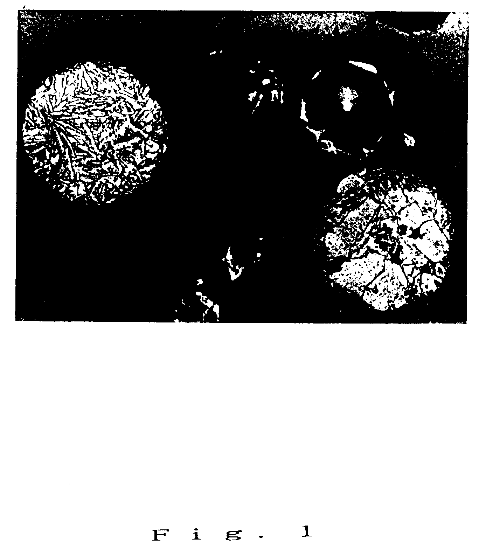

Fig. 1 is a microphotograph of about 500 magnification of polished surfaces of spherical hydraulic particles obtained in Example 2 of the invention.

### BEST MODE FOR CARRYING OUT THE INVENTION

### [Examples 1, 2]

A starting powder having a normal Portland cement clinker composition was melted in an arc furnace at 2000°C, followed by atomizing in an atomizing tank at 10⁻² mmHg through a fine nozzle to obtain three kinds of spherical hydraulic particles which had a diameter not larger than 60 µm with an average size of about 16 µm and different circularities (Examples 1, 2 and Comparative Example 1). 3 wt% of gypsum having a Blaine value of 9000 cm²/g was added to each of the particles to obtain test cements.

The resultant spherical hydraulic materials contained major proportions of round-shaped alite having a size of not larger than 15 µm and belite having a size of not larger than 10 µm and were smaller in size than ordinary clinker minerals. The spherical particles were not recognized to have clear differences in the size and formulation of the mineral between the central and surface portions. Thus, the entirety of the particles was homogeneous in the mineral and chemical composition.

Naphthalene sulfonate formaldehyde condensate (Mighty 150, available from Kao Co.,Ltd.) was added to the respective cements to obtain pastes.

As Comparative Example 2, normal Portland cement was similarly used to make a paste.

The paste was mixed by hands: 400 g of each cement was weighed in a mixing bowl prescribed in JIS R 5201, to which an aqueous solution of Mighty 150 was added so that the amount of Mighty 150 made was 2.0% based on the cement; and finally a remaining amount of water was added for adjusting the consistency of the paste. The consistency of the paste was coincided with a standard consistency of a setting test.

The mixed paste was used to make a 2 x 2 x 12 cm test piece. After removal from a mold, the test pieces were subjected to a strength test after curing in water over 28 days at normal temperatures and after curing in an autoclave. The curing conditions in the autoclave were 179°C and 6 hours.

The cement using the spherical hydraulic material was mixed at a water-cement ratio of 55% and allowed to stand in a rotational viscometer. After 3 hours, a large amount of bleeding water was produced, making it difficult to remove the rotor with hands. On the other hand, with the normal Portland cement, little bleeding water was recognized and the rotor could be removed with hands. This phenomenon of the cement using the spherical hydraulic material depended on the highly packing effect of the spherical particles through natural settlement, suggesting the positive efficacy of the hard caking phenomenon.

The strength test values of Examples 1,2 and Comparative Examples 1,2 are shown in Table 1.

| | Average Circularity | Amount of water Required for Standard Consistency (%) | Strength After Curing in Water over 28 Days (Kgf/cm²) | Strength After Curing in Autoclave (Kgf/cm2) |
|---|---|---|---|---|
| Ex. 1 | 0.84 | 20.0 | 1521 | 1746 |
| Ex. 2 | 0.92 | 18.2 | 1760 | 1934 |
| Comp. Ex.1 | 0.63 | 21.9 | 1309 | 1487 |
| Comp. Ex.2 | - | 25.4 | 1043 | 1179 |

The test cements using the spherical hydraulic materials are smaller in the amount of water for standard consistency than the normal Portland cement, revealing that the water reduction effect is greater. The test cements are significantly greater with respect to the strengths. In addition, the particles having average circularities of 0.84 (Example 1) and 0.92 (Example 2) exhibit physical properties better than those having an average circularity of 0.63 (Comparative Example 1).

### [Example 3]

While argon and nitrogen were, respectively, fed at 65 liters/minute and 10 liters/minute in a torch of a high frequency plasma generator with a frequency of about 4 MHz and a continuous high frequency output of 50 kW, a plasma flame was established. A Portland cement clinker powder having a size of about 40 - 100 µm was passed through the plasma flame at a feed of about 1 g/minute, followed by collection of cooled spherical particles accumulated at a lower hopper. As a result, there were obtained spherical particles having an average size of about 70 µm.

In Fig. 1, there is shown a microphotograph of about 500 magnification of polished surfaces of the resultant spherical particles. From this, it was observed that with totally melted particles, there were produced dendritic and needle-like silicate phase minerals and with particles whose surfaces alone were melted, dendritic and needle-like silicate phase minerals were produced only on the surface layer while a silicate phase mineral of the normal form contained in the original clinker was left in the inside thereof.

3 wt% of a fine powder of gypsum was added to the spherical particles to provide a test cement. A cement paste was made using an appropriate amount of water for standard consistency of the setting test prescribed in JIS R 5201 and used to make a 2 x 2 x 12 cm test piece. After removal from a mold, the test piece was cured in water at 20°C and subjected to a compressive strength test. A clinker powder used as Comparative Example 3 was likewise used to make a paste. The results of the test are shown in Table 2.

| | Average Circularity | Amount of water Required for Standard Consistency (%) | Strength After 7 days (Kgf/cm²) | Strength After 28 days (Kgf/cm²) |
|---|---|---|---|---|
| Example 3 | 0.99 | 22 | 71 | 306 |
| Comp. Ex.3 | 0.65 | 30 | 49 | 218 |

The test cement using the spherical particles is smaller in the amount of water for the standard consistency than the cement for comparison in which 3 wt% of the fine powder of gypsum to the clinker, with a better water reducing effect. The strength is significantly higher for the test cement.

### [Example 4]

Moderate heat Portland cement clinker particles having a size of not larger than 45 µm were fed to an arc flame spraying device to provide spherical particles having an average size of about 15 µm.

3 wt% of a fine powder of gypsum was added to original clinker particles (Comparative Example 4) and the spherical particles to obtain test cements, respectively.

Naphthalene sulfonate formaldehyde condensate (Mighty 150, available from Kao Co., Ltd.) was added to each of the cements as a water reducing agent thereby obtaining cement pastes. The paste was mulled by hands: 400 g of each cement was weighed in a mixing bowl prescribed in JIS R 5201, to which an aqueous solution of Mighty 150 was added so that the amount of Mighty 150 made 2.3% based on the cement; and finally a remaining amount of water was added for adjusting the consistency of the paste. The consistency of the paste was coincided with a standard consistency of a setting test.

The mixed paste was used to make a 2 x 2 x 12 cm test piece. After removal from a mold, the test piece was subjected to a 28 days strength test after curing in water at 20°C. The test results are shown in Table 3.

| | Average Circularity | Amount of water Required for Standard Consistency (%) | Strength After 28 days (Kgf/cm²) |
|---|---|---|---|
| Example 4 | 0.98 | 16.8 | 2030 |
| Comp. Ex.4 | 0.61 | 25.4 | 1080 |

The test cement using the spherical particles is smaller in the amount of water for the standard consistency than the cement for comparison using the clinker. Accordingly, there can be produced pastes, mortars or concretes which are high fluidity and high strength using a smaller amount of water.

### [Example 5]

A blast furnace slag melted at 1450°C was placed in a gasification furnace using oxygen-enriched air, to which quicklime, siliceous stone, copper slag and fluorite were gradually added, followed by heating at 1900°C to melt, thereby providing a main chemical composition of normal Portland cement clinker.

Subsequently, the melt of the mixture was placed in a high frequency melting furnace of a gas atomizing apparatus. While forcing the melt to run away from the furnace, air with a pressure of 6 MPa was blown against the melt for fine granulation, thereby obtaining spherical clinker particles having an average size of about 30 µm and an average circularity of 0.97.

3 wt% of a fine powder of gypsum was added to the resultant spherical particles to provide a test cement. A cement paste was mixed in accordance with an amount of water for standard consistency of a setting test prescribed in JIS R 5201 and used to make a test piece having a diameter of 5 cm and a length of 10 cm. After removal from a mold, the piece was cured in water at 20°C and subjected to a compressive strength test.

As Comparative Example 5, clinker particles which were prepared by a known cement-making procedure and which had the same composition and average size as in Example 1 were tested in the same manner as in Example 5.

The test results are shown in Table 4.

| | Average Circularity | Amount of water Required for Standard Consistency (%) | Strength After 7 days (Kgf/cm²) | Strength After 28 days (Kgf/cm²) |
|---|---|---|---|---|
| Example 5 | 0.97 | 23 | 514 | 805 |
| Comp. Ex.5 | 0.63 | 29 | 294 | 650 |

The test cement using the spherical particles of the example is smaller in the amount of water for the standard consistency than the cement for comparison, revealing a greater water reduction effect and better strength developability.

## Claims

1. A spherical hydraulic powder which comprises CaO, SiO₂, Al₂O₃ and Fe₂O₃ as main ingredients, characterized in that the powder is cooled after melting and smoothing at least on the surfaces thereof and has a size of not larger than 500 µm and an average circularity of not smaller than 0.7.

2. A method for making a spherical hydraulic material characterized by comprising melting a starting material composed mainly of CaO, SiO₂, Al₂O₃ and Fe₂O₃, scattering the resultant melt, and cooling and solidifying the melt in the scattered state.

3. A method for making a spherical hydraulic material characterized by comprising providing a hydraulic powder composed mainly of CaO, SiO₂, Al₂O₃ and Fe₂O₃, melting at least surfaces of the powder in a scattered state, and cooling and solidifying the melted powder being scattered.

4. A method for making a spherical hydraulic material characterized by comprising mixing a dried, calcined or sintered product or a melt of a starting material composed mainly of one or more of CaO, SiO₂, Al₂O₃ and Fe₂O₃ with a hot material such as an iron slag which is in the form of a melt or has a temperature not lower than 500°C to provide a mixed melt, scattering the melt, and cooling and solidifying the melt being scattered.

## Patentansprüche

1. Kugelförmiges hydraulisches Pulver, das CaO, SiO₂, Al₂O₃ und Fe₂O₃ als Hauptbestandteile umfaßt, dadurch gekennzeichnet, daß das Pulver nach Schmelzen und Glätten wenigstens seiner Oberflächen gekühlt wird und eine Größe von nicht mehr als 500 µm und eine durchschnittliche Kreisförmigkeit von nicht weniger als 0,7 aufweist.

2. Verfahren zur Herstellung eines kugelförmigen Materials, gekennzeichnet durch Umfassen von Schmelzen eines Ausgangsmaterials, das hauptsächlich aus CaO, SiO₂, Al₂O₃ und Fe₂O₃ besteht, Verteilen der sich ergebenden Schmelze und Kühlen und Erstarren der Schmelze in dem verteilten Zustand.

3. Verfahren zur Herstellung eines kugelförmigen hydraulischen Materials, gekennzeichnet durch Umfassen von Schaffen eines hydraulischen Pulvers, das hauptsächlich aus CaO, SiO₂, Al₂O₃ und Fe₂O₃ besteht, Schmelzen wenigstens von Oberflächen des Pulvers in einem verteilten Zustand und Kühlen und Erstarren des geschmolzenen Pulvers, das gerade verteilt wird.

4. Verfahren zur Herstellung eines kugelförmigen hydraulischen Materials, gekennzeichnet durch Umfassen von Mischen eines getrockneten, gebackenen oder gesinterten Produkts oder einer Schmelze eines Ausgangsmaterials, das hauptsächlich aus einem oder mehreren von CaO, SiO₂, Al₂O₃ und Fe₂O₃ besteht, mit einem heißen Material, wie z.B. einer Eisenschlacke, die in der Form einer Schmelze vorliegt oder eine Temperatur nicht niedriger als 500°C aufweist, um eine Mischschmelze zu schaffen, Verteilen der Schmelze und Kühlen und Erstarren der Schmelze, die gerade verteilt wird.

## Revendications

1. Poudre hydraulique à particules sphériques, contenant en tant que principaux constituants CaO, SiO₂, Al₂O₃ et Fe₂O₃, caractérisée en ce qu'on a fait refroidir la poudre après en avoir fait fondre, au moins en surface, les particules et les avoir lissées, et en ce que les particules de cette poudre ont une taille d'au plus 500 µm et un indice moyen de circularité d'au moins 0,7.

2. Procédé de fabrication d'un matériau hydraulique à particules sphériques, caractérisé en ce qu'il comporte le fait de faire fondre un matériau de départ constitué principalement de CaO, SiO₂, Al₂O₃ et Fe₂O₃, le fait d'éparpiller en particules la masse fondue résultante, et le fait de faire refroidir et solidifier la masse fondue éparpillée en particules.

3. Procédé de fabrication d'un matériau hydraulique à particules sphériques, caractérisé en ce qu'il comporte le fait de prendre une poudre constituée principalement de CaO, SiO₂, Al₂O₃ et Fe₂O₃, le fait de faire fondre, au moins en surface, les particules de poudre éparpillées, et le fait de faire refroidir et solidifier la poudre fondue éparpillée en particules.

4. Procédé de fabrication d'un matériau hydraulique à particules sphériques, caractérisé en ce qu'il comporte le fait de mélanger un produit issu du séchage, de la calcination ou du frittage d'un matériau de départ constitué principalement d'un ou de plusieurs constituants choisis parmi CaO, SiO₂, Al₂O₃ et Fe₂O₃, ou une masse fondue d'un tel matériau de départ, avec un matériau très chaud comme un laitier, qui se trouve à l'état fondu ou à une température d'au moins 500°C, pour obtenir une masse fondue mixte, le fait d'éparpiller en particules cette masse fondue, et le fait de faire refroidir et solidifier la masse fondue éparpillée en particules.
